# EUROPEAN PATENT SPECIFICATION

(11) **EP 4 068 040 B1**
(45) Date of publication and mention of the grant of the patent: **24.09.2025**
(21) Application number: 22159046.6
(22) Date of filing: 27.02.2022
(51) Int. Cl.: A01D 34/00, G05D 1/00, G01S 19/20, G01S 19/14, G01S 19/49

(54) **IMPROVED OPERATION FOR A ROBOTIC WORK TOOL**
VERBESSERTE NAVIGATION FÜR EIN ROBOTISCHES ARBEITSWERKZEUG
FONCTIONNEMENT AMÉLIORÉ POUR UN OUTIL DE TRAVAIL ROBOTIQUE

(30) Priority: 29.03.2021 US 202117216374
(43) Date of publication of application: 05.10.2022
(73) Proprietor: HUSQVARNA AB, 561 82 Huskvarna (SE)
(72) Inventor: ÄRLIG, Ulf, 564 35 BANKERYD (SE); FORSMAN, Pär, 554 47 JÖNKÖPING (SE)

(56) References cited:
- EP-A1- 3 696 639
- US-A1- 2017 120 445
- US-A1- 2019 041 869

## Description

### TECHNICAL FIELD

This application relates to robotic work tools and in particular to a system and a method for providing an improved servicing, such as exiting a service station for a robotic work tool, such as a lawnmower.

### BACKGROUND

Automated or robotic power tools such as robotic lawnmowers are becoming increasingly more popular. In a typical deployment a work area, such as a garden, the work area is enclosed by a boundary with the purpose of keeping the robotic lawnmower inside the work area. The work area may also be limited by objects such as walls or rocks. Alternatively or additionally to the boundary wire, many robotic work tools are arranged to operate and navigate using a satellite navigations system, such as GNSS or GPS. The robotic work tool may also or alternatively be arranged to operate or navigate utilizing a beacon-based navigation system, such as UWB or RTK.

However, as is known such navigation system relies on a clear line of sight between the robotic work tool and the beacon(s) and/or satellite(s) for the robotic work tool to be able to receive signals from the beacon(s) and/or satellite(s) in a reliable manner, i.e. the received signals are of a signal quality and/or signal strength sufficient for proper interpretation, in order to provide reliable navigation. As would be known, the actual values needed for the signal strength and quality depends on many factors such as type of signal, interference in the environment and accuracy required to mention a few examples.

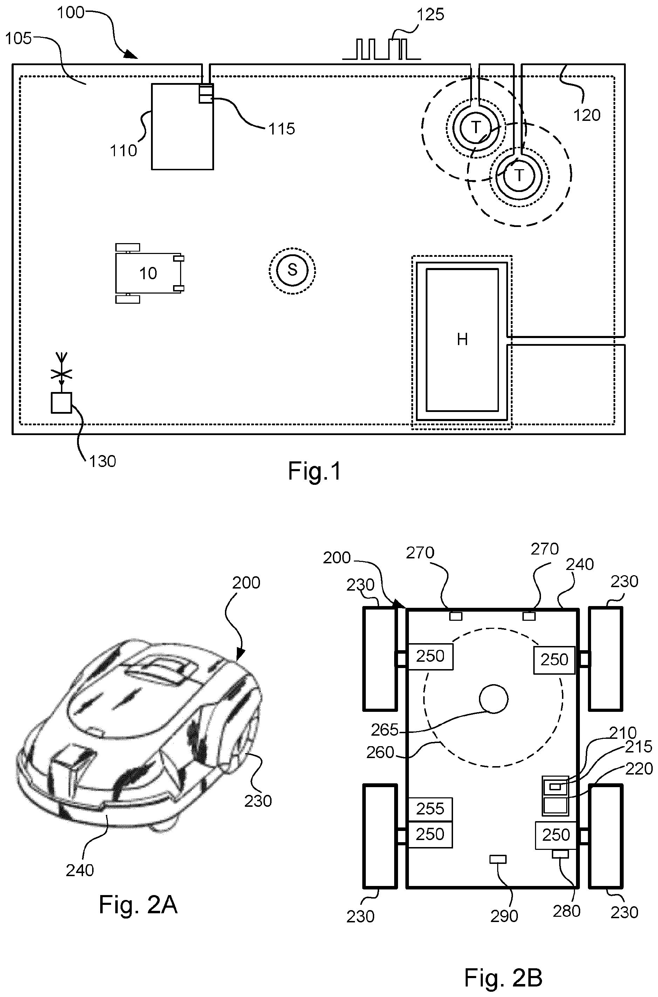

Figure 1 shows a schematic view of an example of a typical work area 105, being a garden, in which a robotic work tool 10, such as a robotic lawnmower, is set to operate.

The garden contains a number of obstacles, exemplified herein by a number (2) of trees (T), a stone (S) and a house structure (H). The trees are marked both with respect to their trunks (filled lines) and the extension of their foliage (dashed lines). The garden is enclosed by a boundary wire 120 through which a control signal 125 is transmitted by a signal generator 115 housed in a charging station 110, the control signal 125 generating a magnetic field that can be sensed by the robotic work tool 10. In this example the boundary wire 120 is laid so that so-called islands are formed around the trees and the house. The garden also comprises or is in the line of sight of at least one signal navigation device 130. In this example the signal navigation device 130 is exemplified as a beacon, but it should be noted that it may also be any number of satellites.

The use of satellite and/or beacon navigation enables for a boundary that is virtual, in addition to or as an alternative to the boundary wire 120. A virtual boundary 120' is indicated in figure 1 by the dotted line. From hereon there will be made no difference between the boundary being defined by the boundary wire 120 or as a virtual boundary 120' and the boundary of the work area 105 will hereafter simply be referred to as the boundary 120, unless otherwise specifically mentioned.

In the example of figure 1, the charging station is positioned in a location where it is easy to locate and to access and where it is in direct line of sight with the signal navigation device 130. However, in most circumstances, such a position is also exposed to environmental factors and the weather which may greatly increase the wear and tear of the charging station and the robotic work tool as it is docked in the charging station.

Previous attempts at finding solutions for reducing such wear and tear brought about by environmental factors include fitting a roof to the charging station making the charging station heavy, more cost-some to produce and more awkward to service.

Other attempts at finding solutions include arranging the charging station under a roof. However this makes it difficult for the robotic work tool to find its way into the charging station as signals may no longer be reliably received under the roof or behind other shelter.

The patent application published as US 20190041869A1 discloses a self-moving device, including: a moving module, a task execution module, a control module. The control module is electrically connected to the moving module and the task execution module, controls the moving module to actuate the self-moving device to move, controls the task execution module to execute a working task. The self-moving device further includes a satellite navigation apparatus, electrically connected to the control module and configured to receive a satellite signal and output current location information of the self-moving device. The control module determines whether quality of location information output by the satellite navigation apparatus at a current location satisfies a preset condition, controls, if the quality does not satisfy the preset condition, the moving module to actuate the self-moving device to change a moving manner, to enable quality of location information output by the satellite navigation apparatus at a location after the movement to satisfy the preset condition.

Thus, there is a need for an improved manner of enabling a robotic work tool to easily locate and access a service station arranged in a manner that does not expose the service station to the full effect of environmental factors.

### SUMMARY

It is therefore an object of the teachings of this application to overcome or at least reduce those problems by providing a robotic lawnmower system according to claim 1.

In some embodiments the controller is further configured to cause the robotic work tool to exit the service station in a straight line.

In some embodiments the controller is further configured to cause the robotic work tool to exit the service station through the exit of the service station.

In some embodiments the controller is further configured to cause the robotic work tool to exit the service station by reversing out of the service station.

The controller is configured to determine that the satellite navigation device is not receiving reliable signals at the predefined distance and then halt propulsion. In some embodiments the controller is further configured to prompt an error indication to this effect. In some such alternative or additional embodiments the controller is further configured to receive a command to proceed a second predefined distance and again determine that the satellite navigation device is receiving reliable signals and then navigate the robotic work tool based on the satellite navigation device.

The controller is configured to determine that the satellite navigation device is receiving reliable signals at the predefined distance

In some embodiments the predefined distance is in the range of 1-5 m, in the range of 2-5 m, in the range of 3-5 m, 1 m, 2 m, 3 m, 4 m or 5m.

In some embodiments the second predefined distance is in the range of 0,5-2 m, in the range of 1-2 m, 0.5 m, 0.75 m, 1 m, 1.5 m or 2m.

The controller is further configured to: navigate the robotic work tool based on the satellite navigation device to a hand-over point; and cause the robotic work tool to enter a service station utilizing deduced reckoning by propelling the robotic work tool a predefined distance by operating the propulsion device.

In some embodiments the controller is configured to determine that reliable signals are received if the signals are of a number and a quality that enables satellite navigation within a defined accuracy (for example 0.5 m).

In some embodiments the satellite navigation device is based on GNSS navigation. In some embodiments the satellite navigation device is further based on a beacon navigation technique. In some embodiments the beacon navigation technique is RTK.

In some embodiments the robotic work tool is configured for operating in a work area comprising an uneven surface, where objects are of a similar appearance to the surface and/or overhanging obstacles.

The robotic work tool is a robotic lawnmower. In some embodiments the service station is a charging station.

It is also an object of the teachings of this application to overcome the problems by providing a method according to claim 13.

### BRIEF DESCRIPTION OF THE DRAWINGS

The invention will be described in further detail under reference to the accompanying drawings in which:
Figure 1 shows an example of a robotic work tool system being a robotic lawnmower system;
Figure 2A shows an example of a robotic lawnmower according to one embodiment of the teachings herein;
Figure 2B shows a schematic view of the components of an example of a robotic work tool being a robotic lawnmower according to an example embodiment of the teachings herein;
Figure 3 shows a schematic view of a robotic work tool system according to an example embodiment of the teachings herein;
Figure 4 shows a schematic view of a robotic work tool according to an example embodiment of the teachings herein;
Figure 5 shows a schematic view of a robotic work tool according to an example embodiment of the teachings herein; and
Figure 6 shows a corresponding flowchart for a method according to an example embodiment of the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein. Like reference numbers refer to like elements throughout.

It should be noted that even though the invention is directed to robotic lawnmowers, the teachings herein may also be applied to, robotic ball collectors, robotic mine sweepers, robotic farming equipment, or other robotic work tools where a work tool is to be safeguarded against from accidentally extending beyond or too close to the edge of the robotic work tool.

Figure 2A shows a perspective view of a robotic work tool 200, here exemplified by a robotic lawnmower 200, having a body 240 and a plurality of wheels 230 (only one side is shown). The robotic work tool 200 may be a multi-chassis type or a mono-chassis type (as in figure 2A). A multi-chassis type comprises more than one main body parts that are movable with respect to one another. A mono-chassis type comprises only one main body part.

It should be noted that even though the invention is directed to a robotic lawnmower, the teachings may equally be applied to other types of robotic work tools, such as robotic floor grinders, robotic floor cleaners to mention a few examples where a work tool should be kept away from the edges for safety or convenience concerns.

It should also be noted that the robotic work tool is a self-propelled robotic work tool, capable of autonomous navigation within a work area, where the robotic work tool propels itself across or around the work area in a pattern (random or predetermined).

Figure 2B shows a schematic overview of the robotic lawnmower 200. In this example embodiment the robotic lawnmower 200 is of a mono-chassis type, having a main body part 240. The main body part 240 substantially houses all components of the robotic lawnmower 200. The robotic lawnmower 200 has a plurality of wheels 230. In the exemplary embodiment of figure 2B the robotic lawnmower 200 has four wheels 230, two front wheels and two rear wheels. At least some of the wheels 230 are drivably connected to at least one electric motor 250. It should be noted that even if the description herein is focused on electric motors, combustion engines may alternatively be used, possibly in combination with an electric motor. In the example of figure 2B, each of the wheels 230 is connected to a common or to a respective electric motor 255 for driving the wheels 230 to navigate the robotic lawnmower 200 in different manners. The wheels, the motor 255 and possibly the battery 250 are thus examples of components making up a propulsion device. By controlling the motors 250, the propulsion device may be controlled to propel the robotic lawnmower 200 in a desired manner, and the propulsion device will therefore be seen as synonymous with the motor(s) 250.

The robotic lawnmower 200 also comprises a controller 210 and a computer readable storage medium or memory 220. The controller 210 may be implemented using instructions that enable hardware functionality, for example, by using executable computer program instructions in a general-purpose or special-purpose processor that may be stored on the memory 220 to be executed by such a processor. The controller 210 is configured to read instructions from the memory 220 and execute these instructions to control the operation of the robotic lawnmower 200 including, but not being limited to, the propulsion and navigation of the robotic lawnmower.

The controller 210 in combination with the electric motor 255 and the wheels 230 forms the base of a navigation system (possibly comprising further components) for the robotic lawnmower, enabling it to be self-propelled as discussed under figure 2A,

The controller 210 may be implemented using any suitable, available processor or Programmable Logic Circuit (PLC). The memory 220 may be implemented using any commonly known technology for computer-readable memories such as ROM, RAM, SRAM, DRAM, FLASH, DDR, SDRAM or some other memory technology. The robotic lawnmower 200 may further be arranged with a wireless communication interface 215 for communicating with other devices, such as a server, a personal computer or smartphone, the charging station, and/or other robotic work tools. Examples of such wireless communication devices are Bluetooth^{®}, WiFi^{®} (IEEE802.11b), Global System Mobile (GSM) and LTE (Long Term Evolution), to name a few.

The robotic lawnmower 200 also comprises a grass cutting device 260, such as a rotating blade 260 driven by a cutter motor 265. The grass cutting device being an example of a work tool 260 for a robotic work tool 200. As a skilled person would understand the cutter motor 265 is accompanied or supplemented by various other components, such as a drive shaft to enable the driving of the grass cutting device, taken to be understood as included in the cutter motor 265. The cutter motor 265 will therefore be seen as representing a cutting assembly 265 or in the case of another work tool, a work tool assembly 265.

The robotic lawnmower 200 further comprises at least one navigation sensor, such as an optical navigation sensor, an ultrasound sensor, a beacon navigation sensor and/or a satellite navigation sensor 290. The optical navigation sensor may be a camera-based sensor and/or a laser-based sensor. The beacon navigation sensor may be a Radio Frequency receiver, such as an Ultra Wide Band (UWB) receiver or sensor, configured to receive signals from a Radio Frequency beacon, such as a UWB beacon. Alternatively or additionally, the beacon navigation sensor may be an optical receiver configured to receive signals from an optical beacon. The satellite navigation sensor may be a GPS (Global Positioning System) device or other Global Navigation Satellite System (GNSS) device. In embodiments, where the robotic lawnmower 200 is arranged with a navigation sensor, the magnetic sensors 270 as will be discussed below are optional. In embodiments relying (at least partially) on a navigation sensor, the work area may be specified as a virtual work area in a map application stored in the memory 220 of the robotic lawnmower 200. The virtual work area may be defined by a virtual boundary.

In the examples that will be discussed herein the navigation sensor is a satellite navigation sensor, such as GPS, GNSS or a supplemental satellite navigation sensor such as RTK.

The robotic lawnmower 200 also comprises deduced reckoning sensors 280. The deduced reckoning sensors may be odometers, accelerometer or other deduced reckoning sensors. In some embodiments, the deduced reckoning sensors are comprised in the propulsion device, wherein a deduced reckoning navigation may be provided by knowing the current supplied to a motor and the time the current is supplied, which will give an indication of the speed and thereby distance for the corresponding wheel.

For enabling the robotic lawnmower 200 to navigate with reference to a boundary wire emitting a magnetic field caused by a control signal transmitted through the boundary wire, the robotic lawnmower 200 is, in some embodiments, further configured to have at least one magnetic field sensor 270 arranged to detect the magnetic field and for detecting the boundary wire and/or for receiving (and possibly also sending) information to/from a signal generator (will be discussed with reference to figure 1). In some embodiments, the sensors 270 may be connected to the controller 210, possibly via filters and an amplifier, and the controller 210 may be configured to process and evaluate any signals received from the sensors 270. The sensor signals are caused by the magnetic field being generated by the control signal being transmitted through the boundary wire. This enables the controller 210 to determine whether the robotic lawnmower 200 is close to or crossing the boundary wire, or inside or outside an area enclosed by the boundary wire.

As mentioned above, in some embodiments, the robotic lawnmower 200 is arranged to operate according to a map of the work area 205 (and possibly the surroundings of the work area 205) stored in the memory 220 of the robotic lawnmower 200. The map may be generated or supplemented as the robotic lawnmower 200 operates or otherwise moves around in the work area 205.

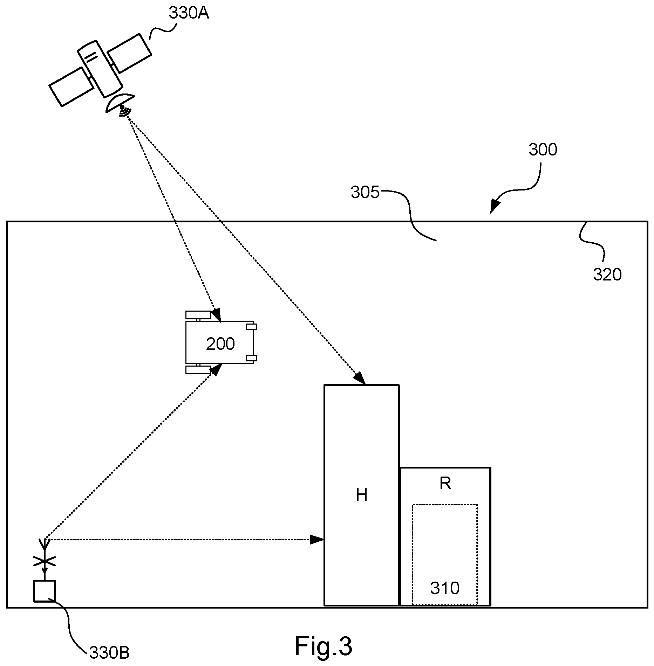

Figure 3 shows a robotic work tool system 300 in some embodiments. The schematic view is not to scale. The robotic work tool system 300 of figure 3, corresponds in many aspects to the robotic work tool system 100 of figure 1, except that the robotic work tool system 300 of figure 3 comprises a robotic work tool 200 according to the teachings herein. It should be noted that the work area shown in figure 3 is simplified for illustrative purposes but may contain some or all of the features of the work area of figure 1, and even other and/or further features as will be hinted at below.

As with figures 2A and 2B, the robotic work tool is exemplified by a robotic lawnmower, whereby the robotic work tool system may be a robotic lawnmower system or a system comprising a combinations of robotic work tools, one being a robotic lawnmower, but the teachings herein may also be applied to other robotic work tools adapted to operate within a work area.

The robotic work tool system 300 comprises a charging station 310 which in some embodiments is arranged with a signal generator (not shown) for providing a control signal through a boundary wire 320. As an electrical signal is transmitted through a wire, such as the control signal being transmitted through the boundary wire 320, a magnetic field is generated. The magnetic field may be detected using field sensors, such as Hall sensors. A sensor - in its simplest form - is a coil surrounding a conductive core, such as a ferrite core. The amplitude of the sensed magnetic field is proportional to the derivate of the control signal. A large variation (fast and/or of great magnitude) results in a high amplitude for the sensed magnetic field. As mentioned above, the actual boundary wire is optional and the boundary 320 may be virtual, stored in a map application.

The charging station 310 is one example of a servicing station. Other examples include refuelling stations, tool attachment stations, weather sheltering stations to mention a few examples.

The robotic work tool system 300 may comprise or be arranged to utilize at least one signal navigation device 330. In the example of figure 3 two options are shown, a first being at least one satellite 330A (only one shown, but it should be clear that a minimum of three are needed for an accurate three 2 dimensional location). The second option being at least one beacon, such as an RTK beacon 330B (only one shown). In the case of a RTK beacon, the RTK beacon also requires reception of high quality signals from at least one satellite.

The work area 305 is in this application exemplified as a garden, but can also be other work areas as would be understood. As hinted at above, the garden may contain a number of obstacles, for example a number of trees, stones, slopes and houses or other structures.

In some embodiments the robotic work tool is arranged or configured to traverse and operate in a work area that is not essentially flat, but contains terrain that is of varying altitude, such as undulating, comprising hills or slopes or such. The ground of such terrain is not flat and it is not straightforward how to determine an angle between a sensor mounted on the robotic work tool and the ground. The robotic work tool is also or alternatively arranged or configured to traverse and operate in a work area that contains obstacles that are not easily discerned from the ground. Examples of such are grass or moss covered rocks, roots or other obstacles that are close to ground and of a similar colour or texture as the ground. The robotic work tool is also or alternatively arranged or configured to traverse and operate in a work area that contains obstacles that are overhanging, i.e. obstacles that may not be detectable from the ground up, such as low hanging branches of trees or bushes. Such a garden is thus not simply a flat lawn to be mowed or similar, but a work area of unpredictable structure and characteristics. The work area 305 exemplified with referenced to figure 3, may thus be such a non-uniform work area as disclosed in this paragraph that the robotic work tool is arranged to traverse and/or operate in.

In the below several embodiments of how the robotic work tool may be adapted will be disclosed. It should be noted that all embodiments may be combined in any combination providing a combined adaptation of the robotic work tool.

Returning to the charging station 310, in this example it is located under a roof (R) which in this example is attached or adjacent to a house (H). The roof R is but one example of a sheltered position that the charging station may be located in in order to provide shelter against environmental factors. The scale of the house in relation to the charging station has been manipulated for illustrative purposes. It should be noted that even though the description herein is focused on sheltering from environmental factors, the teachings herein may also be used to simply provide for an alternative location of a servicing station that may otherwise be difficult to locate and access.

In the example of figure 3, the robotic lawnmower 200 is in the line of sight (as indicated by the dotted arrows reaching the robotic lawnmower 200) of both the satellite 330A and the RTK beacon 330B and the robotic work tool will thus be able to navigate utilizing the satellite navigation sensor 290, as the signals will be reliably received. The robotic lawnmower 200 is thus in a location or area where navigation using signal navigation devices 330 is possible. It should be noted that the robotic lawnmower 200 need not necessarily be in the line of sight of all available signal navigation devices 330, but has to be in the line of sight of an adequate number, where the adequate number is determined by the operational requirements as a skilled person would understand. In the discussion below, the satellite and the RTK will be considered to be examples of the last needed resource without which navigation becomes unreliable.

As also can be seen in figure 3, the charging station 310 is not in line of sight of the satellite nor the RTK beacon (as is also indicated by dotted arrows reaching the house). This exemplifies a situation where a sufficient number of signals, either from satellites and/or from RTK beacons are received by the robotic lawnmower.

In order to be able to properly navigate to the charging station 310 in such a system, the robotic lawnmower 200 is configured to utilize a hand-over point P. The hand-over point may be a point stored in the map application, or a point for which coordinates are stored or a point for which navigation parameters are stored for (such as navigational commands needed for reaching the point P).

Below it will be discussed how the robotic lawnmower 200 may utilize the hand-over point to successfully exit the charging station and also how to utilize the hand-over point to successfully enter the charging station.

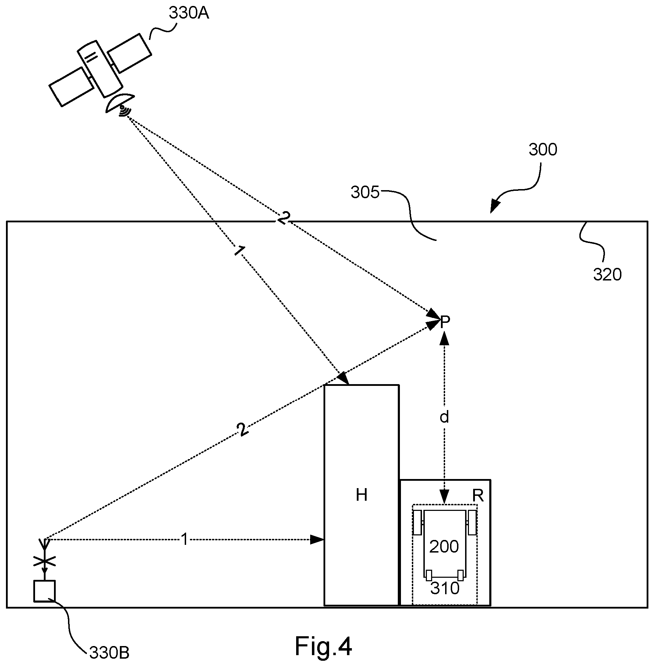

Figure 4 shows the example robotic lawnmower system 300 of figure 3, where the robotic lawnmower 200 is docked in the charging station 310. In the first location, i.e. when docked, the robotic lawnmower 200 is (possibly) not able to receive all signals reliable form the signal navigation devices 330. This is indicated by the dotted arrows marked "1".

However, in order to successfully exit the charging station and to be able to operate reliably even when not being able to receive reliable signals from the signal navigation devices 330, the robotic lawnmower 200 is configured to rely on the deduced navigation sensors 280, possibly in combination with the magnetic field sensor(s) 270, to exit the charging station and propel to a determined hand-over point P. In example embodiments, the hand-over point is located in a straight line outside the charging station at a known distance, and the robotic lawnmower 200 thus simply exits the charging station 310 by propelling the robotic lawnmower 200 a known distance, where the distance may be an actual distance or a time distance corresponding to a physical distance. The distance is noted d in figure 4. Examples of the distance d are in the range of 1-5 m, in the range of 2-5 m, in the range of 3-5 m, 1 m, 2 m, 3 m, 4 m or 5m. In an embodiment where the hand-over point is stored in the memory as navigational commands, the commands may be reverse X meters, or reverse for Y seconds.

The controller of the robotic lawnmower is thus configured to exit the service station the predefined distance by operating the propulsion device based on the deduced reckoning device.

In the embodiment shown the robotic lawnmower 200 exits the charging station 310 by reversing out of it. 5. The controller of the robotic work tool is thus configured to cause the robotic work tool to exit the service station by reversing out of the service station.

In example embodiments where the charging station may be exited in other manners, such as through forward propulsion, the robotic lawnmower may exit the charging station in a corresponding manner. The controller is further configured to cause the robotic work tool to exit the service station through the exit of the service station.

The controller may further be configured to cause the robotic work tool to exit the service station in a straight line.

As the robotic lawnmower 20 will be in the second location, corresponding to the hand-over point P it will - again - be able to receive a signal from at least one of the signal navigation devices reliably (as indicated by the dotted arrows marked "2").

As the robotic lawnmower 200 reaches the hand-over point it determines that signals are reliably received before commencing operation in the work area. The determination may be performed at the hand-over point or before reaching the hand-over point, or a combination of the two. If (enough) signals are not reliably received, the robotic lawnmower 200 halts its operation in order to avoid uncontrollable operation. The controller of the robotic work tool is thus configured to determine that the satellite navigation device is not receiving reliable signals and then halt propulsion.

In some embodiments the robotic lawnmower 200 may prompt an error indication for example through a user interface (display) of the robotic lawnmower 200 or through communication to another device such as a smartphone of a user, informing that signals are not reliably received and that operation has been halted. Alternatively the error indication may be provided to a server or other remote controlling device through the communication interface.

In response to this the user may provide a command indicting that the robotic lawnmower 200 is to proceed looking for signals, by propelling a further or second distance and try again. The command may be provided through a user interface of the robotic lawnmower 200, such as a user pushing a button. Or the command may be provided through the communication interface from a user device, such as a smartphone. Alternatively the command may be received from a server or other remote controlling device through the communication interface.

The controller of the robotic work tool of some embodiments is thus configured to receive a command to proceed a second predefined distance and again determine that the satellite navigation device is receiving reliable signals and then navigate the robotic work tool based on the satellite navigation device. This may of course be repeated if there are still no reliable signals even after further propelling the second distance. The second distance may also be changed between such repetitions. Alternatively the second distance is given as part of the command or the second distance is a default distance.

In some embodiments, the second predefined distance is in the range of 0,5-2 m, in the range of 1-2 m, 0.5 m, 0.75 m, 1 m, 1.5 m or 2m.

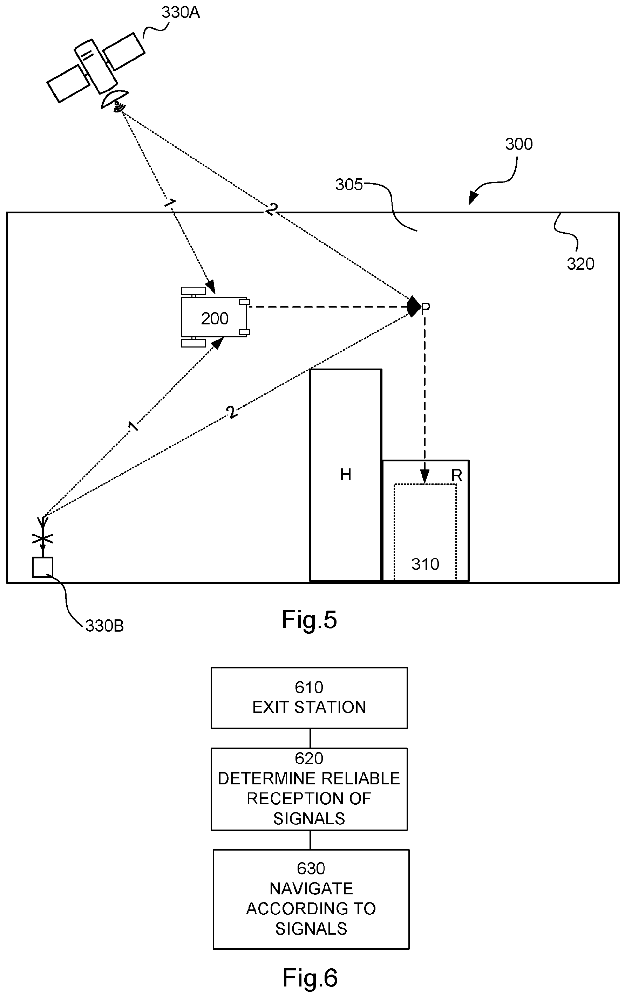

Figure 5 shows the example robotic lawnmower system 300 of figure 3, where the robotic lawnmower 200 is going to dock in the charging station 310. In the first location, the robotic lawnmower 200 is able to receive all signals reliable form the signal navigation devices 330. This is indicated by the dotted arrows marked "1". From this position, the robotic lawnmower 200 is able to navigate to the hand-over point P utilizing the satellite sensors 290 utilizing the or signal navigation devices 330. at the hand-over point P, the robotic lawnmower 200 is still able to receive signals reliably and is able to assume a position (location and direction) from which it will be able to navigate to enter the charging station using the deduced reckoning device 280 - or at least without relying on the satellite navigation sensors. The path to be taken may be stored as commands for how to propel the robotic lawnmower 200, for example straight for X meters or for Y seconds. In figure 5 the robotic lawnmower 200 will thus be able to follow the dashed path first relying on satellite navigation and later (after the hand-over point) not relying on satellite navigation. The controller of the robotic lawnmower is thus configured to navigate the robotic work tool based on the satellite navigation device to a hand-over point; and to cause the robotic work tool to enter a service station utilizing deduced reckoning by propelling the robotic lawnmower a predefined distance by operating the propulsion device.

As discussed in the above the controller is configured to determine that reliable signals are received if the signals are of a number and a quality that enables satellite navigation within a defined accuracy (for example 0.5 m). As also mentioned, the satellite navigation device is based on GNSS navigation and in some embodiments also based on a beacon navigation technique, such as RTK.

Figure 6 shows a flowchart for a general method according to herein. The method is for use in a robotic work tool comprising a propulsion device and a satellite navigation device. The method comprises causing 610 the robotic work tool to exit a service station a predefined distance by operating the propulsion device. As the service station is exited or during such exit, the robotic work tool determines 620 that the satellite navigation device is receiving reliable signals and then navigates 630 the robotic work tool based on the satellite navigation device.

## Claims

1. A robotic lawnmower system (300) comprising a service station (310) and a robotic lawnmower (200), the robotic lawnmower (200) comprising a propulsion device (250), a deduced reckoning device (280), a satellite navigation device (290) and a controller (210), wherein the controller (210) is configured to
cause the robotic lawnmower (200) to exit the service station (310) a predefined distance to a hand-over-point by operating the propulsion device (250) based on the deduced reckoning device and then, as the robotic lawnmower (200) reaches the hand-over point,
determine that the satellite navigation device (290) is receiving reliable signals by determining that the signals are of a number and a quality that enables satellite navigation within a defined accuracy and, if so,
commence operation for the robotic lawnmower (200) and
navigate the robotic lawnmower (200) based on the satellite navigation device (290), and if not, halt propulsion;
wherein the controller (210) is further configured to cause the robotic lawnmower (200) to dock in the service station (310) by
navigating the robotic lawnmower (200) based on the satellite navigation device (290) to the hand-over point; and
cause the robotic lawnmower (200) to enter the service station (310) utilizing deduced reckoning without relying on the satellite navigation sensors by propelling the robotic lawnmower (200) the predefined distance from the hand-over point by operating the propulsion device (250).

2. The robotic lawnmower system (300) according to claim 1, wherein the controller (210) is further configured to cause the robotic lawnmower (200) to exit the service station (310) in a straight line.

3. The robotic lawnmower system (300) according to any preceding claim, wherein the controller (210) is further configured to cause the robotic lawnmower to exit the service station (310) through the exit of the service station (310).

4. The robotic lawnmower system (300) according to any preceding claim, wherein the controller (210) is further configured to cause the robotic lawnmower (200) to exit the service station (310) by reversing out of the service station (310).

5. The robotic lawnmower system (300) according to claim 1, wherein the controller (210) is further configured to prompt an error indication in response to that the controller determines that the satellite navigation device is not receiving reliable signals at the predefined distance, the error indication informing that signals are not reliably received and that operation has been halted.

6. The robotic lawnmower system (300) according to claim 5, wherein the controller (210) is further configured to receive a command to proceed a second predefined distance, in response to that the controller determines that the satellite navigation device is not receiving reliable signals at the predefined distance, and again determine that the satellite navigation device is receiving reliable signals and then navigate the robotic lawnmower based on the satellite navigation device.

7. The robotic lawnmower system (300) according to any preceding claim, wherein the predefined distance is in the range of 1-5 m, in the range of 2-5 m, in the range of 3-5 m, 1 m, 2 m, 3 m, 4 m or 5m.

8. The robotic lawnmower system (300) according to any of preceding claims 6 to 7, wherein the second predefined distance is in the range of 0,5-2 m, in the range of 1-2 m, 0.5 m, 0.75 m, 1 m, 1.5 m or 2m.

9. The robotic lawnmower system (300) according to any preceding claim, wherein the satellite navigation device (290) is based on GNSS navigation

10. The robotic lawnmower system (300) according to claim 9, wherein the satellite navigation device (290) is further based on a beacon navigation technique.

11. The robotic lawnmower system (300) according to claim 10, wherein the beacon navigation technique is RTK.

12. The robotic lawnmower system (300) according to any previous claim, wherein the robotic lawnmower (200) is configured for operating in a work area comprising an uneven surface, where objects are of a similar appearance to the surface and/or overhanging obstacles.

13. A method for use in a robotic lawnmower system (300) comprising a service station (200) and a robotic lawnmower, the robotic lawnmower (200) comprising a propulsion device (250), a deduced reckoning device (280), and a satellite navigation device (290), wherein the method comprises
causing the robotic lawnmower (200) to exit the service station (310) a predefined distance to a hand-over-point by operating the propulsion device (250) based on the deduced reckoning device and then, as the robotic lawnmower (200) reaches the hand-over point,
determining that the satellite navigation device (290) is receiving reliable signals by determining that the signals are of a number and a quality that enables satellite navigation within a defined accuracy and if so,
commencing operation for the robotic lawnmower (200) and
navigating the robotic lawnmower (200) based on the satellite navigation device (290), and if not, halting propulsion;
wherein
the method further comprises the robotic lawnmower (200) docking in the service station (310) by
navigating the robotic lawnmower (200) based on the satellite navigation device (290) to the hand-over point; and
the robotic lawnmower (200) entering the service station (310) utilizing deduced reckoning without relying on the satellite navigation sensors by propelling the robotic lawnmower (200) from the hand-over point the predefined distance by operating the propulsion device (250).

## Patentansprüche

1. Roboterrasenmähersystem (300), umfassend eine Wartungsstation (310) und einen Roboterrasenmäher (200), der Roboterrasenmäher (200) umfassend eine Antriebsvorrichtung (250), eine Vorrichtung (280) für abgeleitete Berechnung, eine Satellitennavigationsvorrichtung (290) und eine Steuerung (210), wobei die Steuerung (210) konfiguriert ist zum
Veranlassen, dass der Roboterrasenmäher (200) die Wartungsstation (310) um eine vordefinierte Distanz zu einem Übergabepunkt durch Betreiben der Antriebsvorrichtung (250) basierend auf der Vorrichtung für abgeleitete Berechnung verlässt, und dann, wenn der Roboterrasenmäher (200) den Übergabepunkt erreicht,
Bestimmen, dass die Satellitennavigationsvorrichtung (290) durch Bestimmen, dass die Signale eine Anzahl und eine Qualität haben, die eine Satellitennavigation mit einer definierten Genauigkeit ermöglicht, zuverlässige Signale empfängt, und, falls dies der Fall ist,
Beginnen des Betriebs für den Roboterrasenmäher (200) und
Navigieren des Roboterrasenmähers (200) basierend auf der Satellitennavigationsvorrichtung (290), und falls dies nicht der Fall ist, Anhalten des Antriebs;
wobei die Steuerung (210) ferner konfiguriert ist, um den Roboterrasenmäher (200) zu veranlassen, durch Navigieren des Roboterrasenmähers (200) basierend auf der Satellitennavigationsvorrichtung (290) zu dem Übergabepunkt in der Wartungsstation (310) anzudocken; und
Veranlassen des Roboterrasenmähers (200), in die Wartungsstation (310) unter Nutzung einer abgeleiteten Berechnung einzutreten, ohne sich auf die Satellitennavigationssensoren zu verlassen, durch Antreiben des Roboterrasenmähers (200) um die vordefinierte Distanz von dem Übergabepunkt durch Betreiben der Antriebsvorrichtung (250).

2. Roboterrasenmähersystem (300) nach Anspruch 1, wobei die Steuerung (210) ferner konfiguriert ist, um den Roboterrasenmäher (200) zu veranlassen, die Wartungsstation (310) in einer geraden Linie zu verlassen.

3. Roboterrasenmähersystem (300) nach einem der vorstehenden Ansprüche, wobei die Steuerung (210) ferner konfiguriert ist, um den Roboterrasenmäher zu veranlassen, die Wartungsstation (310) durch den Ausgang der Wartungsstation (310) zu verlassen.

4. Roboterrasenmähersystem (300) nach einem der vorstehenden Ansprüche, wobei die Steuerung (210) ferner konfiguriert ist, um den Roboterrasenmäher (200) zu veranlassen, die Wartungsstation (310) durch rückwärtiges Herausfahren aus der Wartungsstation (310) zu verlassen.

5. Roboterrasenmähersystem (300) nach Anspruch 1, wobei die Steuerung (210) ferner konfiguriert ist, um eine Fehlermeldung als Reaktion darauf auszugeben, dass die Steuerung bestimmt, dass die Satellitennavigationsvorrichtung in der vordefinierten Distanz keine zuverlässigen Signale empfängt, wobei die Fehlermeldung darüber informiert, dass Signale nicht zuverlässig empfangen werden und dass der Betrieb angehalten wurde.

6. Roboterrasenmähersystem (300) nach Anspruch 5, wobei die Steuerung (210) ferner konfiguriert ist, um einen Befehl zu empfangen, um um einen zweiten vordefinierten Distanz fortzuschreiten, als Reaktion darauf, dass die Steuerung bestimmt, dass die Satellitennavigationsvorrichtung in der vordefinierten Distanz keine zuverlässigen Signale empfängt, und erneut bestimmt, dass die Satellitennavigationsvorrichtung zuverlässige Signale empfängt, und dann den Roboterrasenmäher basierend auf der Satellitennavigationsvorrichtung navigiert.

7. Roboterrasenmähersystem (300) nach einem der vorstehenden Ansprüche, wobei die vordefinierte Distanz in dem Bereich von 1-5 m, in dem Bereich von 2-5 m, in dem Bereich von 3-5 m, 1 m, 2 m, 3 m, 4 m oder 5 m liegt.

8. Roboterrasenmähersystem (300) nach einem der vorstehenden Ansprüche 6 bis 7, wobei die zweite vordefinierte Distanz in dem Bereich von 0,5-2 m, in dem Bereich von 1-2 m, 0,5 m, 0,75 m, 1 m, 1,5 m oder 2 m liegt.

9. Roboterrasenmähersystem (300) nach einem der vorstehenden Ansprüche, wobei die Satellitennavigationsvorrichtung (290) auf GNSS-Navigation basiert

10. Roboterrasenmähersystem (300) nach Anspruch 9, wobei die Satellitennavigationsvorrichtung (290) ferner auf einer Beacon-Navigationstechnik basiert.

11. Roboterrasenmähersystem (300) nach Anspruch 10, wobei die Beacon-Navigationstechnik RTK ist.

12. Roboterrasenmähersystem (300) nach einem der vorstehenden Ansprüche, wobei das Roboterrasenmähersystem (200) für das Betreiben in einem Arbeitsbereich konfiguriert ist, umfassend eine unebene Oberfläche, an der Objekte ein ähnliches Aussehen wie die Oberfläche haben und/oder überhängende Hindernisse sind.

13. Verfahren zur Verwendung in einem Roboterrasenmähersystem (300), umfassend eine Wartungsstation (200) und einen Roboterrasenmäher, der Roboterrasenmäher (200) umfassend eine Antriebsvorrichtung (250), eine Vorrichtung (280) für abgeleitete Berechnung und eine Satellitennavigationsvorrichtung (290), wobei das Verfahren umfasst
Veranlassen, dass der Roboterrasenmäher (200) die Wartungsstation (310) eine vordefinierte Distanz zu einem Übergabepunkt durch Betreiben der Antriebsvorrichtung (250) basierend auf der Vorrichtung für abgeleitete Berechnung, und dann, wenn der Roboterrasenmäher (200) den Übergabepunkt erreicht,
Bestimmen, dass die Satellitennavigationsvorrichtung (290) durch Bestimmen, dass die Signale eine Anzahl und eine Qualität haben, die eine Satellitennavigation mit einer definierten Genauigkeit ermöglicht, zuverlässige Signale empfängt, und, falls dies der Fall ist,
Beginnen des Betriebs für den Roboterrasenmäher (200) und
Navigieren des Roboterrasenmähers (200) basierend auf der Satellitennavigationsvorrichtung (290) und, falls nicht, Anhalten des Antriebs;
wobei das Verfahren ferner umfasst, dass der Roboterrasenmäher (200) durch Navigieren des Roboterrasenmähers (200) basierend auf der Satellitennavigationsvorrichtung (290) zu dem Übergabepunkt in der Wartungsstation (310) andockt; und
wobei der Roboterrasenmäher (200) in die Wartungsstation (310) unter Nutzung der abgeleiteten Berechnung eintritt, ohne sich auf die Satellitennavigationssensoren zu verlassen, durch Antreiben des Roboterrasenmähers (200) von dem Übergabepunkt des vordefinierten Abstands durch Betreiben der Antriebsvorrichtung (250).

## Revendications

1. Système de tondeuse à gazon robotisée (300) comprenant une station-service (310) et une tondeuse à gazon robotisée (200), la tondeuse à gazon robotisée (200) comprenant un dispositif de propulsion (250), un dispositif de repérage déduit (280), un dispositif de navigation par satellite (290) et un contrôleur (210), dans lequel le contrôleur (210) est configuré pour
faire sortir la tondeuse à gazon robotisée (200) de la station-service (310) sur une distance prédéfinie jusqu'à un point de passage en faisant fonctionner le dispositif de propulsion (250) sur la base du dispositif de repérage déduit, puis, lorsque la tondeuse à gazon robotisée (200) atteint le point de passage,
déterminer que l'appareil de navigation par satellite (290) reçoit des signaux fiables en déterminant que les signaux sont d'un nombre et d'une qualité permettant la navigation par satellite avec une précision définie et, dans l'affirmative,
commencer le fonctionnement de la tondeuse à gazon robotisée (200) et
naviguer la tondeuse à gazon robotisée (200) sur la base du dispositif de navigation par satellite (290) et, si ce n'est pas le cas, arrêter la propulsion ;
dans lequel le contrôleur (210) est en outre configuré pour amener la tondeuse à gazon robotisée (200) à s'amarrer à la station-service (310) en la faisant naviguer, grâce au dispositif de navigation par satellite (290), jusqu'au point de transfert de la tondeuse à gazon robotisée (200) ; et
faire entrer la tondeuse à gazon robotisée (200) dans la station-service (310) par calcul déduit sans utiliser les capteurs de navigation par satellite en propulsant la tondeuse à gazon robotisée (200) sur la distance prédéfinie à partir du point de transfert en actionnant le dispositif de propulsion (250).

2. Système de tondeuse à gazon robotisée (300) selon la revendication 1, dans lequel le contrôleur (210) est en outre configuré pour que la tondeuse à gazon robotisée (200) quitte la station-service (310) en ligne droite.

3. Système de tondeuse à gazon robotisée (300) selon l'une quelconque des revendications précédentes, dans lequel le contrôleur (210) est en outre configuré pour faire sortir la tondeuse à gazon robotisée de la station-service (310) par la sortie de la station-service (310).

4. Système de tondeuse à gazon robotisée (300) selon l'une quelconque des revendications précédentes, dans lequel le contrôleur (210) est en outre configuré pour faire sortir la tondeuse à gazon robotisée (200) de la station-service (310) en faisant marche arrière pour sortir de la station-service (310).

5. Système de tondeuse à gazon robotisée (300) selon la revendication 1, dans lequel le contrôleur (210) est en outre configuré pour émettre une indication d'erreur en réponse au fait que le contrôleur détermine que le dispositif de navigation par satellite ne reçoit pas de signaux fiables à la distance prédéfinie, l'indication d'erreur informant que les signaux ne sont pas reçus de manière fiable et que l'opération a été interrompue.

6. Système de tondeuse à gazon robotisée (300) selon la revendication 5, dans lequel le contrôleur (210) est en outre configuré pour recevoir une commande de progression sur une deuxième distance prédéfinie, en réponse à laquelle le contrôleur détermine que le dispositif de navigation par satellite ne reçoit pas de signaux fiables à la distance prédéfinie, et détermine à nouveau que le dispositif de navigation par satellite reçoit des signaux fiables et fait ensuite naviguer la tondeuse à gazon robotisée sur la base du dispositif de navigation par satellite.

7. Système de tondeuse à gazon robotisée (300) selon l'une quelconque des revendications précédentes, dans lequel la distance prédéfinie est comprise entre 1 et 5 m, entre 2 et 5 m, entre 3 et 5 m, 1 m, 2 m, 3 m, 4 m ou 5 m.

8. Système de tondeuse à gazon robotisée (300) selon l'une quelconque des revendications précédentes 6 à 7, dans lequel la deuxième distance prédéfinie est comprise entre 0,5 et 2 m, entre 1 et 2 m, 0,5 m, 0,75 m, 1 m, 1,5 m ou 2 m.

9. Système de tondeuse à gazon robotisée (300) selon l'une quelconque des revendications précédentes, dans lequel le dispositif de navigation par satellite (290) est basé sur la navigation GNSS.

10. Système de tondeuse à gazon robotisée (300) selon la revendication 9, dans lequel le dispositif de navigation par satellite (290) est en outre basé sur une technique de navigation par balise.

11. Système de tondeuse à gazon robotisée (300) selon la revendication 10, dans lequel la technique de navigation par balise est RTK.

12. Système de tondeuse à gazon robotisée (300) selon l'une quelconque des revendications précédentes, dans lequel la tondeuse à gazon robotisée (200) est configurée pour fonctionner dans une région de travail comprenant une surface irrégulière, où des objets ont un aspect similaire à la surface et/ou des obstacles en surplomb.

13. Procédé à utiliser dans un système de tondeuse à gazon robotisée (300) comprenant une station-service (200) et une tondeuse à gazon robotisée, la tondeuse à gazon robotisée (200) comprenant un dispositif de propulsion (250), un dispositif de repérage déduit (280) et un dispositif de navigation par satellite (290), dans laquelle le procédé consiste à
faire sortir la tondeuse à gazon robotisée (200) de la station-service (310) sur une distance prédéfinie jusqu'à un point de passage en faisant fonctionner le dispositif de propulsion (250) sur la base du dispositif de repérage déduit, puis, lorsque la tondeuse à gazon robotisée (200) atteint le point de transfert,
déterminer que l'appareil de navigation par satellite (290) reçoit des signaux fiables en déterminant que les signaux sont d'un nombre et d'une qualité permettant la navigation par satellite avec une précision définie et, le cas échéant,
commencer le fonctionnement de la tondeuse à gazon robotisée (200) et
naviguer la tondeuse à gazon robotisée (200) sur la base du dispositif de navigation par satellite (290) et, si ce n'est pas le cas, arrêter la propulsion ;
dans lequel le procédé comprend en outre l'amarrage de la tondeuse à gazon robotisée (200) à la station-service (310) par la navigation de la tondeuse à gazon robotisée (200) sur la base du dispositif de navigation par satellite (290) jusqu'au point de transfert ; et
la tondeuse à gazon robotisée (200) entre dans la station-service (310) en utilisant un calcul déduit sans se fier aux capteurs de navigation par satellite, en propulsant la tondeuse à gazon robotisée (200) depuis le point de transfert sur la distance prédéfinie en actionnant le dispositif de propulsion (250).
